# EUROPEAN PATENT APPLICATION

(11) **EP 2 448 263 A1**
(43) Date of publication of application: **02.05.2012**
(21) Application number: 10792007.6
(22) Date of filing: 16.06.2010
(51) Int. Cl.: H04N 7/173, H04N 5/445

(54) **PROGRAM INFORMATION DISPLAY DEVICE, DISPLAY METHOD, AND PROGRAM**

(30) Priority: 24.06.2009 JP 2009150249
(71) Applicant: Sharp Kabushiki Kaisha, Osaka-shi, Osaka 545-8522 (JP)
(72) Inventor: ITOH, Atsushi, Osaka-shi, Osaka 545-8522 (JP); SASAKI, Jun, Osaka-shi, Osaka 545-8522 (JP)
(74) Representative: Müller - Hoffmann & Partner
(86) International application number: PCT/JP2010/060192
(87) International publication number: WO 2010/150689

(57) **Abstract**

Provided is a program information display device configured to display an electronic program guide including a program cell defined by a time axis and a channel axis on the basis of program information including at least a broadcast time and a channel number, the device **characterized by** comprising a display controller configured to perform such a control that an attribute display region for a region of the program cell is disposed outside the region of the program cell, the attribute display region indicating an attribute of a program with use of a color corresponding to the attribute of the program and allowing the attribute information to be identified.

## Description

### TECHNICAL FILED

The present invention relates to a program information display technique.

### BACKGROUND ART

Recently, digital television receivers have been widely used, and television programs have been checked and programmed, for example, with use of an electronic program guide (EPG). Generally, there is provided a function in such a program information provision service in which a list of program broadcasting schedule information of broadcasting stations is displayed in the same display format as in "radio and TV sections" appearing in the newspaper.

With use of the displaying function for the electronic program guide, convenient processing such as a program search, a programmed recording, and programmed viewing can be performed with a simple operation. The program information is displayed in a tabular form provided in a region defined by a time axis and a channel axis orthogonal to the time axis. A cell is allocated on the time axis with a period from the start to the end of each program provided as duration. Received program information is described (displayed) in the cell.

The electronic program guide is advantageously excellent in visual recognition at a glance, but includes so many cells that the visual recognition at a glance thereof is not so high. Thus, for example, the display is designed so that a desired program (cell) can be more easily selected from a large number of programs by displaying categories of programs in a distinguishable manner. The categories of the programs in the electronic program guide are distinguished from each other by making category identification of the programs in the electronic program guide, specifically, by color coding the letters, icons, and backgrounds in the cells according to categories. For example, Patent Document 1 discloses a method in which an electronic program information display device is provided with a display region in a color independent of that of a program title section, as a region color-coded according to a category, and is configured to display the corresponding color in the provided region (claim 6 of Patent Document 1).

### PRIOR ART DOCUMENTS

### PATENT DOCUMENTS

Patent Document 1: Japanese Patent Application Publication No. Hei 11-196343

### SUMMARY OF THE INVENTION

### PROBLEMS TO BE SOLVED BY THE INVENTION

However, in the technique described in Patent Document 1, as shown in Fig. 12 of Patent Document 1, the display region in the color independent of that of the program title section represents a region to which a part of each program cell region is allocated. Comparison between Fig. 10 of Patent Document 1 in which the display region is provided in the background of the program title and Fig. 12 of Patent Document 1 shows that providing the display region in the color independent of that of the program title section reduces the area of the region for displaying the program title. When a cursor points a program cell (in focus) in which the display region in an independent color is provided in the program title section, the region may be filled with the color of the cursor. Thus, there is a problem that when the region pointed by the cursor is thus filled with the color of the cursor, the category of the program of the cell pointed by the cursor is difficult to identify.

An object of the present invention is to improve the visual recognition of a feature display for a program such as a category in an electronic program guide.

### MEANS FOR SOLVING THE PROBLEMS

For displaying of color coding for a category in an electronic program information device according to the present invention, a "groove" which is a region outside a program cell region in an electronic program guide and which is a row or a column, or a combination thereof, having a length adjacent to a program cell is provided with a color corresponding to the category. Alternatively, for the displaying of color coding for a category in the electronic program information device, when a part of each program cell is a display region for a color independent of that of a program title region, a cursor does not overlap with the display region having the color independent of that of the program title region.

An aspect of the present invention provides a program information display device configured to display an electronic program guide including a program cell defined by a time axis and a channel axis on the basis of program information including at least a broadcast time and a channel number, the device characterized by comprising a display controller that performs such a control that an attribute display region for a region of the program cell is disposed outside the region of the program cell, the attribute display region indicating an attribute of a program with use of a color corresponding to the attribute of the program and allowing the attribute information to be identified.

In addition, there is provided a program information display device configured to display an electronic program guide including a program cell defined by a time axis and a channel axis on the basis of program information including at least a broadcast time and a channel number, the device characterized by comprising a display controller that performs such a control that a category display region for a region of the program cell is disposed outside the region of the program cell, the category display region indicating a category of a program with use of a color corresponding to category information of the program and allowing the category information to be identified. The display controller preferably makes a color display in the category display region displayed independently of a focus display indicating that the program cell is in focus. The category display region may overlap with at least one of the time axis and the channel axis. Additionally, at least a part of the focus region does not necessarily overlap with the category display region. The category display region is formed in a region along the time axis, and when the program cell includes a plurality of brief programs and any one of the brief programs is in focus, the display controller may make a color display indicating a category of a program of the region in focus displayed over an entire width of the program cell in the time axis. The present invention may be a digital broadcast receiver comprising the above-described program display device.

Another aspect of the present invention provides a program information display method of displaying an electronic program guide including a program cell defined by a time axis and a channel axis on the basis of program information including at least a broadcast time and a channel number, **characterized in that** a control is performed such that a category display region for a region of the program cell is disposed outside the region of the program cell, the category display region indicating a category of a program with use of a color corresponding to category information of the program and allowing the category information to be identified.

The present invention may be a program for causing a computer to execute the above-described method. In addition, the present invention may be a computer readable recording medium that stores therein the program. The program may be acquired through a transmission medium such as the Internet.

The present description includes the content in its entirety described in the description and/or the drawings of Japanese Patent Application No. 2009-150249 which is the base of the priority of this application.

### EFFECTS OF THE INVENTION

The present invention advantageously improves the visual recognition of color when the categories of the programs in the electronic program list are displayed by colors. Even when a program cell is in focus, the visual recognition of color display indicating a category can be prevented from being affected.

### BRIEF DESCRIPTION OF THE DRAWINGS

Fig. 1 is a functional block diagram showing a configuration example of a television receiver including a program information display device according to an embodiment of the present invention.
Fig. 2 is a diagram showing an example of a remote controller shown in Fig. 1.
Fig. 3A is a diagram showing a display example of an electronic program guide according to the embodiment of the present invention.
Fig. 3B(a) is a diagram showing a relationship between program cells and a category display region when the category display region is displayed for the program cells, and Fig. 3B(b) is a diagram showing an example of category display by color.
Fig. 4 is a diagram showing examples of category display for each cell in the electronic program guide according to the embodiment of the present invention and states where the cell is in focus.
Fig. 5 is a diagram showing a modification of the example of category display in the electronic program guide according to the embodiment of the present invention.
Fig. 6 is a diagram showing an example of a category display example in the electronic program guide according to the embodiment of the present invention and an example of an overlapping state between a focus display and the category display.
Fig. 7 is a diagram showing a flow of processing for displaying the electronic program guide according to the embodiment.

### EXPLANATION OF THE REFERENCE NUMERALS

- 1: frontend
- 3: demultiplexer
- 5: image and sound decoder
- 7: sound output unit
- 11: program information decoder
- 15: program guide data generator
- 17: image synthesizer
- 21: display
- 23: remote-controller-light receiver
- 25: controller (CPU)
- 25a: display controller
- 27: memory
- 27a: program-category association table
- 35: remote controller

### MODES FOR CARRYING OUT THE INVENTION

In this description, program cells are a large number of two dimensional cells defined by time axes and a channel axes for example. Each program cell represents a region where information with which a program to be broadcast in a corresponding time zone and channel can be identified.

In this description, the following description is given with an example where the cells in the electronic program guide are identified by categories. Instead, the present invention may employ any feature display (e.g., attribute) that can indicate a feature of a program by displaying the cells separately by colors. The attributes include the time when the program was created, a country in which the program was created, and whether the program is recommended.

A program information display device according to an embodiment of the present invention is described below with a case where a television receiver includes the program information display device as an example.

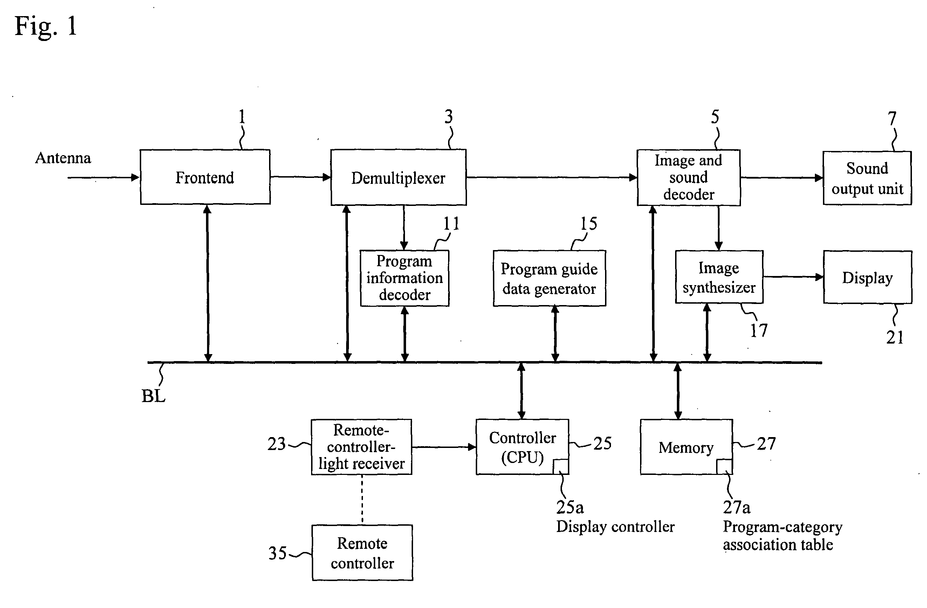

Fig. 1 is a functional block diagram showing a configuration example of a digital broadcast receiver including the program information display device according to the present embodiment. The digital broadcast receiver shown in Fig. 1 includes: a frontend 1 including a tuner for selecting a broadcast program from a broadcast signal received through an antenna; a demultiplexer 3 that demultiplexes the multiplexed signal into a image signal and a sound signal; an image and sound decoder 5 that decodes the encoded image signal and the sound signal; a sound output unit 7 that outputs the decoded sound; a program information decoder 11 that decodes program information from an output from the demultiplexer 3; a program guide data generator 15 that generates electronic program guide (EPG) data from the program information; a screen synthesizer 17 that synthesizes the image, the program display data and the like; and a display unit (display) 21 that displays the image synthesized by the screen synthesizer 17.

The digital broadcast receiver further includes: a controller (CPU) 25 that entirely controls the functional units; a memory unit 27 that stores therein programs for causing the CPU to execute various processes; and a remote-controller-light receiver 23 that receives a remote control signal from a remote controller 35.

As a functional unit for displaying, the controller 25 includes a display controller 25a that controls the displaying of the electronic program guide on the display unit 21. Actually, this function is generally implemented by a program stored in the memory unit 27 and the like. The memory unit 27 stores therein a program and its attribute, e.g., association between the program and a category. When the category is to be displayed as the attribute of the program, a program-category association table 27a is provided, for example. The attribute information of the program also includes: information on whether the viewing or the recording of the program is programmed; information indicating that the program is a recommended program; and information on whether the program is a parentally controlled program.

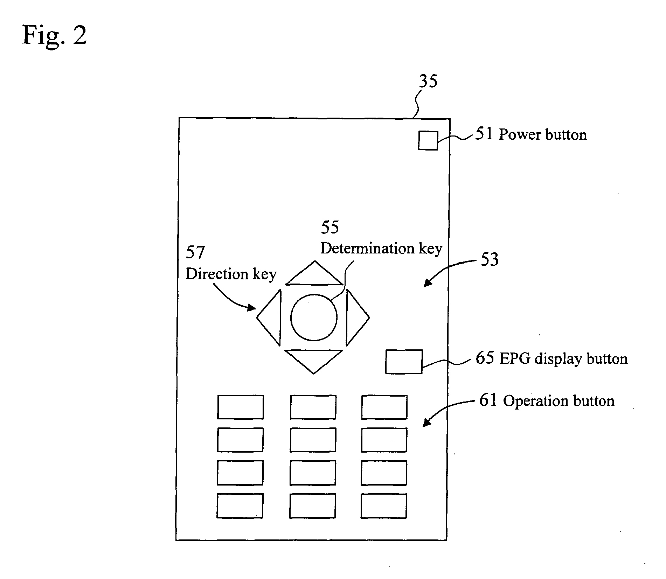

Fig. 2 is a diagram exemplarily showing a surface configuration of the remote controller 35. The remote controller 35 shown in Fig. 2 includes: a power button 51; a key operation unit 53 having a determination key 55 for determining such processes as viewing and recording while the electronic program guide is displayed and a direction key 57 for moving across the program cells and the like; various operation buttons 61; and an EPG display button 65 for displaying the EPG on the display. An operation means is generally the remote controller as shown in Fig. 2, but may also be an operation unit provided on a main body of a television receiver or a recording and reproducing apparatus.

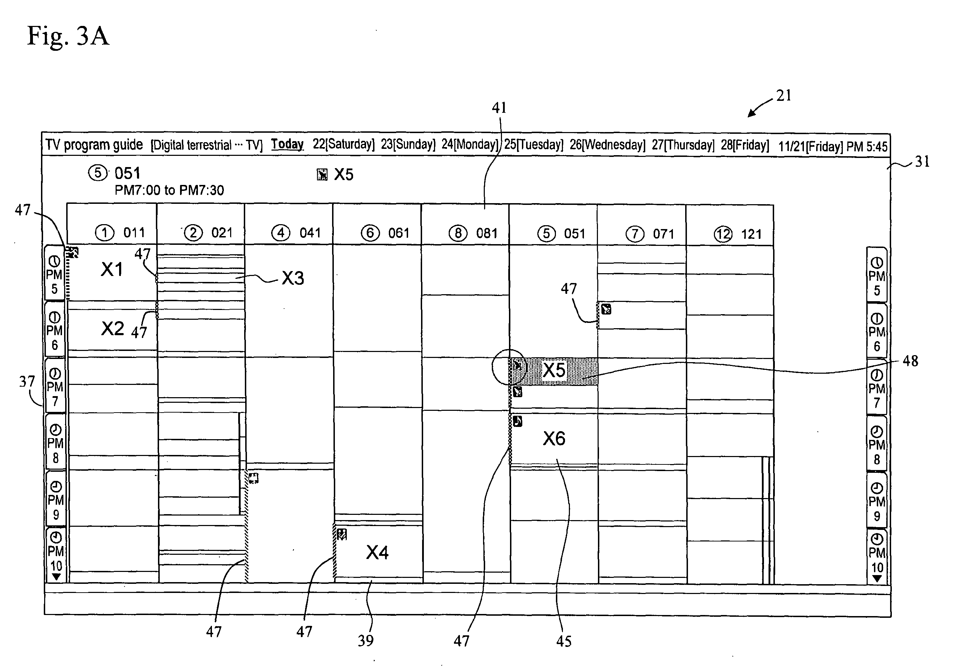

Fig. 3A is a diagram showing a display example of an electronic program guide according to the embodiment of the present invention. The display unit 21 is displaying an EPG display 31 of the electronic program guide. For example, in the EPG display 31, an EPG display region is defined by a time axis (vertical axis) 37 for showing broadcast time zones and a channel (broadcast station) axis 41 for showing broadcasting channel numbers. The EPG display region includes a large number of program cells 45 sorted by time and broadcasting station with vertically extending vertical lines and horizontally extending horizontal lines. In each program cell 45, information (program title, program subtitle, cast of the program, and the like) of the program is displayed. The information is generated by the program guide data generator 15 based on the program information generated from EIT in broadcast wave and the like through the program information decoder 11. A user can select a program the user desires to watch or record from the information in the program cell and the time and the broadcasting station using the direction key 57, and can determine the viewing or the like of the program using the determination key 55. A reference numeral 48 denotes a program cell currently in focus (focus displayed).

In an actual display, the program information is displayed in the program cells 45 as much as possible. However, in the figure, detail description of the program information in the program cells 45 is omitted. Only program information pieces X1 to X6 are shown in the respective program cells 45 provided with reference numerals 46A to 46F. Still, generally, the program information is shown in all the program cells in an actual display.

Here, for example, on a 011 channel, the program information X1 for a program broadcast during the five o'clock hour and the program information X2 for a program broadcast during the six o'clock hour are respectively displayed on the corresponding program cells 45. On a 021 channel, a number of programs are broadcast in respective short periods of time during the five o'clock hour. For such brief programs, for example, the program information X3 may be only partially displayed. On channel 061, the program information X4 is displayed in the program cell during the 10 o'clock hour. On channel 051, the program information X5 and the program information X6 are respectively displayed in the program cells during the 7 o'clock hour and the 8 o'clock hour.

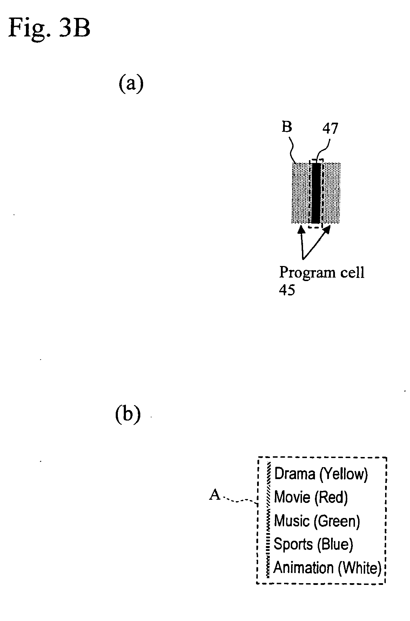

The display controller 25a also performs such a control that a data EPG as shown in Fig. 3 is displayed based on the program guide data and the like.

As shown in Fig. 3A and Fig. 3B(a), a reference numeral 47 denotes a program category display region (which can also be referred to as an intermediate groove between the program cells 45) that is disposed between the program cells 45, 45 and displayed independently of the program cells 45. The category display region 47 is a graphic region (generally, a rectangular region or the like) provided to a region of the program cell 45 at a portion outside the region of the program cell 45. Thus, such a control is performed that for the region of the program cell 45, the category display region 47 is provided at a portion outside the program cell 45, the category display region 47 indicating the category of the program with use of a color corresponding to the category information and allowing the category information to be identified. Specifically, a "groove" which is a region outside the program cell region in the EPG and which is a row or a column, or a combination thereof, having a length adjacent to a program cell is provided with a color corresponding to the category. Moreover, as described later, when a cursor 48 points a program cell, the region pointed by the cursor 48 is limited within the program cell 45 and the category display region 47 is not pointed. Even though the region pointed by the cursor 48 may enter a part of the category display region 47, the category display region 47 is not focused as a whole.

Specifying a program cell with a region in focus allows the device to recognize the program determined with the time axis and the channel axis of the corresponding program cell. Thus, viewing, programmed viewing, programmed recording, and the like of the program in focus can be performed easily. Moreover, information in the program cell can be recognized, whereby the technique can also be employed to store view history. In summary, same usability of general electronic program guide can be provided for operations and processing other than category displaying.

The graphic region forming the category display region 47 is disposed at a border portion between the adjacent program cells 45 and thus also serves as a border line between the adjacent program cells 45 (see the drawing denoted with a sign B). The association between the program cell 45 and the category display region 47 for a program is stored in the program-category association table 27a. The program-category association table 27a associates the programs with categories. Fig 3 shows an example where the category display region 47 is displayed on the border region on the time axis adjacent to the program cell 45 (only on the left side in the figure).

As indicated with the sign A in Fig. 3B(b), example of coloring in accordance with categories (drama, movie, and the like) of programs is provided. The category region 47 in the electronic program guide 31 shown in Fig. 3A displays such a category display. Note that, in the category display region 47, the categories may be distinguished by colors or may be distinguished by a visually identifiable display such as a hatch.

Returning to Fig. 3A, more detail description is given. In this display example of the electronic program guide, of the program cells, for example, the program cell of the program information X1 whose category is clear has a corresponding category display region including a display (e.g., color coded display) indicating the category of the program. Meanwhile, the category display region corresponding to the program cell of the program information X1 includes no display (e.g., color coded display) indicating the category. Even for a program cell of a brief program in which only a small amount of program information denoted by X3 is displayable, a display indicating the category can be provided in the category display region. Accordingly, for the brief program for which program information cannot be sufficiently displayed, the category of the program can be visually recognized at a glance, and thus user friendliness is high.

For the program cells respectively displaying the program information pieces dented by X4 to X6, the color coded display is provided in the category display regions. For example, when the program cell in which the X5 is displayed is in focus 48, a large region above the program guide display section largely displays the program information X5 of the channel, broadcast time zone, program title, and the like corresponding to the region in focus. Thus, the program currently in focus can be visually recognized at a glance.

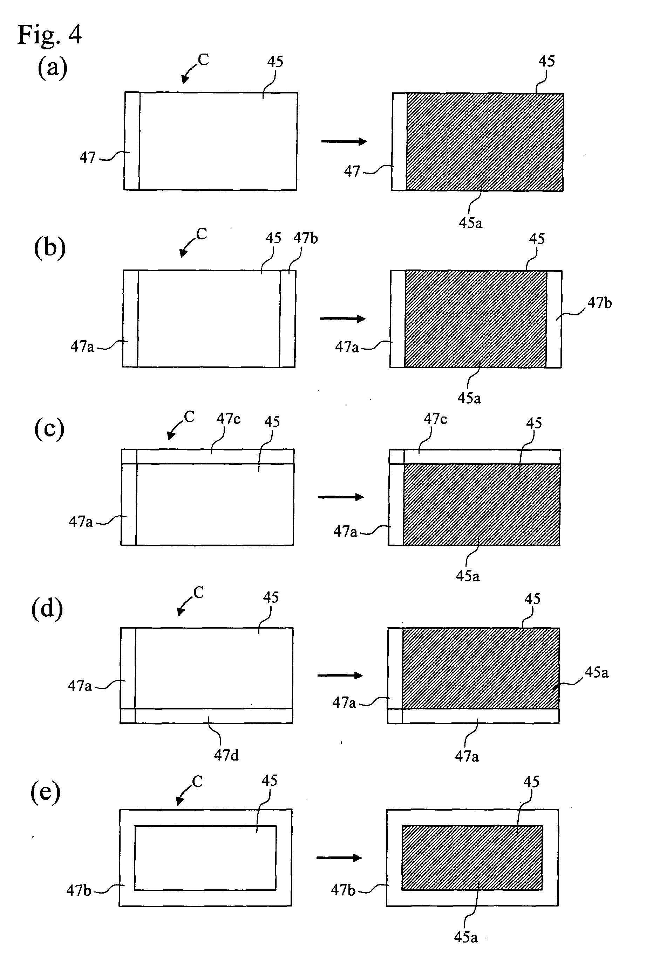

The diagrams denoted by the sign C in Fig. 4 show display examples of the program cell 45, the category display region 47, and a region 45a pointed by the cursor. In Fig. 4(a) to Fig. 4(e) the diagrams on the left side show two-dimensional arrangement examples of the program cell 45 and the category display region 47. The diagrams on the right side show display examples of a case where the program cells shown in the diagrams on the left side is pointed by the cursor 45a.

Fig. 4(a) is a display example in which the category display region 47 is disposed only on the left of the program cell 45. Fig. 4(b) is a display example in which the category display regions 47 on the left 47a and the right 47b of the program cell 45 are provided with the same color (in some cases an attribute may be shown by a combination of different colors). Fig. 4(c) is a display example in which the category display regions 47 is disposed at the left 47a and the above 47c the program cell 45. Fig. 4(d) is a display example in which the category display regions 47 are disposed only on the left 45a and the bottom 47d of the program cell 45. Fig. 4(e) is a display example in which the category display region 47 is disposed on the periphery 47b of the program cell 45. Other arrangement examples are conceivable. As shown in a display example on the right of each drawing, the region 45a in focus is basically the program cell region 45 and the category display region 47 is out of focus.

The category of the program can be readily identified by setting the vertical line or the like between the cells for the programs as the category display region and by color coding a display color of the category display region in accordance with the category of the program. Moreover, when the cursor points the program cell, at least a part of the region of the cursor does not overlap with the category display region. Thus, the color code of the category display region pointed by the cursor can be identified easily. Thus, the category of a program can be easily identified and the user friendliness is maintained.

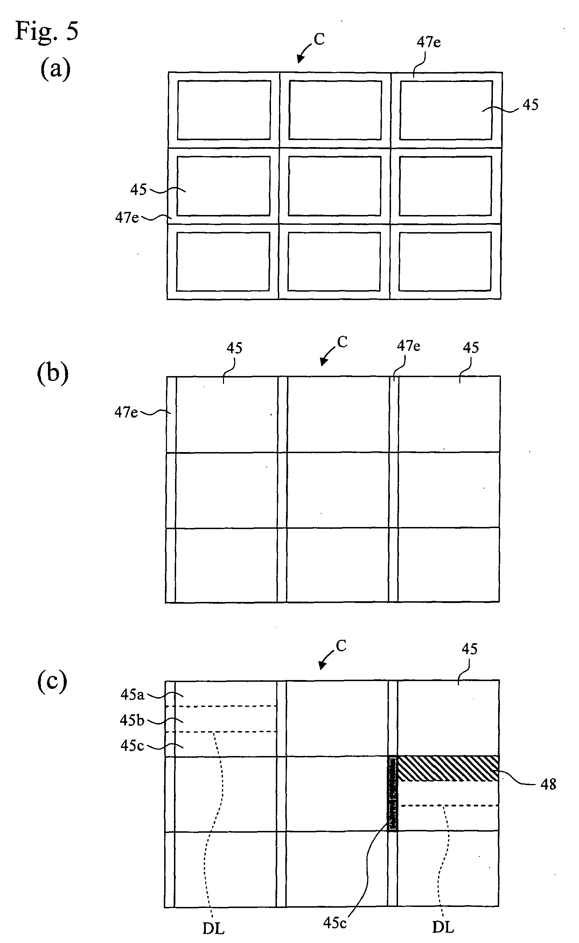

Fig. 5 shows a display example in which plural program cells are arranged based on the display examples in Fig. 4. A display example in Fig. 5(a) shows a display C including 3×3 program cells as a simple example. This example shows a case with the program cell and the category display shown in Fig. 4(e). Accordingly, for each of the program cells 45, the category display 47e is provided on the periphery of the program cell 45. This example is advantageous in that the program cell 45 and the category display 47e have one-to-one correspondence and thus the correspondence therebetween is highly obvious. In the display example of Fig. 5(b), the category display 47e is disposed on the left side of the program cell 45. This example requires the user to memorize the rule of arrangement but is simpler display as a whole as compared with Fig. 5(a). Fig. 5(c) is a diagram showing a modification of the display. In this figure, plural brief programs (three programs 45a, 45b, and 45c in this case) are displayed within an hour time slot in the program cell 45 at the upper-left end. The programs are separated from each other in the time axis by lines different from the solid line, i.e., dashed lines DL in this case. The dashed lines DL extend into the region of category display 47a. Thus, in the category display, the brief programs are provided with colors of corresponding categories. Although it is difficult for brief programs to include sufficient program information in their program cells, some auxiliary information can be provided to the user by using the color displaying of the categories. As shown in the middle right program cell, in the case of the brief programs, when the program cell of one of the programs is in focus 48 (the brief program at the top in the figure), the category display 45c of the brief program on the top in focus may be displayed on the entire category display region of the one hour time slot. As the focus is moved by operating the remote controller, the category display is switched to that for the corresponding brief program. Thus, the color of the category display, which is less visible in a case of brief programs, can be displayed in the region expanded to the longer time axis length such as an hour. Thus, visual recognition of the category display of the brief program is improved. Similar to the above described case, the category display 45c is out of focus as a matter of course.

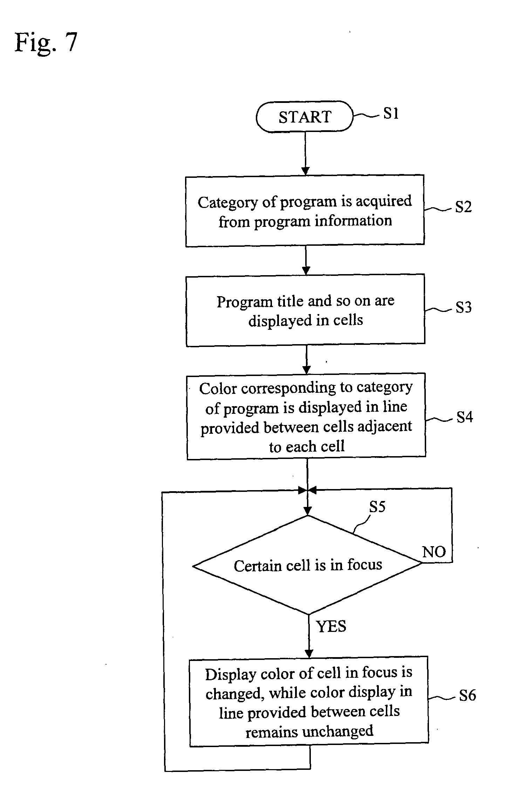

Fig. 7 is a flowchart showing a flow of display control processing for the electronic program guide according to the present embodiment. As shown in Fig. 7, first in step S1, the EPG display button 65 shown in Fig. 2 is pressed to start the display processing for the electronic program guide on the television apparatus side. Then in step S2, the category of the program is acquired from program information such as a program title (the processing is terminated if there is no category). The method of acquiring the category is not limited. The category may be determined from the title of the program or a category included in the information can be directly extracted.

In step S3, the program title and the like are displayed in the program cells. In step S4, a color corresponding to the category of the program is displayed in the category display region (intermediate groove between program cells, e.g., vertical line) provided between the program cells, the category display region being adjacent to each program cell. Steps S3 and S4 can be executed in any order. In step S5, when a certain program cell is in focus (Yes), such a control is performed in step S6 that the color of the program cell in focus is changed to indicate that the program cell is in focus, while the display in the category display region remains unchanged. Thereafter, the processing returns to step S5. The processing shown in Fig. 7 is continuously performed.

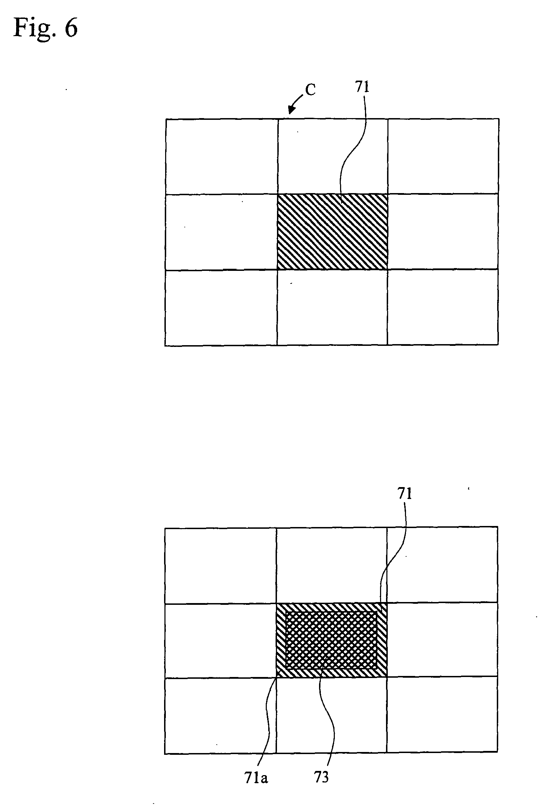

Fig. 6 is a diagram showing a display technique for an electronic program guide according to a modification of the present embodiment. In the display example of the electronic program guide shown in Fig. 6, a color indicating the category is provided at the background of the region of a program cell 71. In the program cell 71, a region on an inner side of the region is to be in focus 73. Thus, in the program cell 71, a region 71a out of focus 73 is provided on the periphery (or a on the vertical line such as the region 47a shown in Fig. 4). By thus limiting the region to be in focus to a region on an inner side than the program cell region, there is an advantage that the category can be easily identified because even when the portion on the inner side of the program cell is in focus, the color display of the region such as the peripheral portion out of focus is highly visible.

Here, the focused region can be changed to perform a control depending on whether or not the program is provided with the category information. For example, when the program is provided with the category information, the focused region is provided on the inner side of the program cell; and when the program is not provided with the category information, a region same as the program cell region is in focus.

In the embodiment, the structure is not limited to those shown in the attached drawings and can be appropriately changed as long as the effect of the present invention is provided. In addition, the present invention can be embodied while being appropriately changed without departing from the scope of the object of the present invention.

Moreover, a program for implementing the functions described in the present embodiment may be stored in the computer readable recording medium and the program recorded in this recording medium maybe read and executed by a computer system so that the processing of the units is executed. Note that the "computer system" includes an OS and hardware such as a peripheral device.

Further, a "computer system" that uses a WWW system includes a homepage provision environment (or display environment).

Furthermore, the "computer-readable recording medium" is a storage device including a portable medium such as a flexible disk, a magneto optical disk, and a ROM or a CD-ROM, as well as a hard disk built in the computer system. In addition, the "computer-readable recording medium" includes: one which dynamically holds a program for a short time like a communication wiring in a case of transmitting a program via a network such as the Internet or a communication line such as a telephone line; and one which holds a program for a certain time period like a volatile memory inside a computer system serving as a server or a client in the aforementioned case of transmitting the program. Besides, the program may implement a part of the aforementioned functions, and additionally, may be capable of implementing the aforementioned functions in combination with a program already recorded in the computer system.

### INDUSTRIAL APPLICABILITY

The present invention is applicable to a program display device.

All the publications, patents, and patent publications cited herein are directly incorporated herein as reference.

## Claims

1. A program information display device configured to display an electronic program guide including a program cell defined by a time axis and a channel axis on the basis of program information including at least a broadcast time and a channel number, the device **characterized by** comprising:
a display controller configured to perform such a control that an attribute display region for a region of the program cell is disposed outside the region of the program cell, the attribute display region indicating an attribute of a program with use of a color corresponding to the attribute of the program and allowing the attribute information to be identified.

2. A program information display device configured to display an electronic program guide including a program cell defined by a time axis and a channel axis on the basis of program information including at least a broadcast time and a channel number, the device **characterized by** comprising:
a display controller configured to perform such a control that a category display region for a region of the program cell is disposed outside the region of the program cell, the category display region indicating a category of a program with use of a color corresponding to category information of the program and allowing the category information to be identified.

3. The program information display device according to claim 2, **characterized in that** the display controller makes a color display in the category display region displayed independently of a focus display indicating that the program cell is in focus.

4. The program information display device according to claim 2 or 3, **characterized in that** the category display region overlaps with at least one of the time axis and the channel axis.

5. The program information display device according to claim 3 or 4, **characterized in that** at least a part of the category display region does not overlap with the focus region.

6. The program display device according to any one of claim 2 to 5, **characterized in that**
the category display region is formed in a region along the time axis, and
when the program cell includes a plurality of brief programs and any one of the brief programs is in focus, the display controller makes a color display indicating a category of a program of the region in focus displayed over an entire width of the program cell in the time axis.

7. A digital broadcast receiver comprising the program display device according to any one of claims 1 to 6.

8. A program information display method of displaying an electronic program guide including a program cell defined by a time axis and a channel axis on the basis of program information including at least a broadcast time and a channel number, **characterized by** comprising performing such a control that a category display region for a region of the program cell is disposed outside the region of the program cell, the category display region indicating a category of a program with use of a color corresponding to category information of the program and allowing the category information to be identified.

9. A program for causing a computer to execute the program information display method according to claim 8.
